# EUROPEAN PATENT APPLICATION

(11) **EP 0 654 429 A1**
(43) Date of publication of application: **24.05.1995**
(21) Application number: 94117585.3
(22) Date of filing: 08.11.1994
(51) Int. Cl.: B65G 47/252, B65B 35/26, B65B 25/14

(54) **Machine for packing articles**

(30) Priority: 19.11.1993 IT BO930463
(71) Applicant: CASSOLI MACCHINE AUTOMATICHE CONFEZIONATRICI S.R.L., I-40033 Casalecchio di Reno (Bologna) (IT)
(72) Inventor: Cassoli, Paolo, I-40033 Casalecchio Di Reno (Bologna) (IT); Cassoli, Stefano, I-40033 Casalecchio Di Reno (Bologna) (IT)
(74) Representative: Porsia, Dino, Dr.

(57) **Abstract**

Underneath and integral with the conveyor (2) that feeds the rolls (R) horizontally to the machine, is a unit (20) that can be raised, into alignment with the roll feeding conveyor (1), and that turns said rolls through ninety degrees to deposit them in single file and vertically in straight horizontal channels (227) where the sets of rolls (R') are taken at the right moment by the pushing cross pieces (30) travelling along the lower side of a parallel-chain conveyor (31) driven in phase with the machine, stably mounted in the latter, and feeding the sets of rolls in phase to the subsequent means of stacking and packing. The roll orienting unit is designed to turn with variable speed and in phase with the machine cycle, to form sets made up of a selectable number of rolls. The pushing cross pieces (30) of said conveyor, by which the sets of vertical rolls are carried forward, are designed for quick removal when the machine is used for packing horizontal rolls, in order to allow for the passage through said conveyor of the conveyor (2) mounted above the orienting unit (20), which is lowered.

## Description

Machines for packing sets consisting of superimposed layers of products such as, for example, rolls of paper, boxes or the like, arriving in single file and in a plurality of lines from a single feeding line are known. Machines of this kind are disclosed in, for example, US Patent No. 3 455 085 or in Italian Patent No. 1 225 033, to which documents full reference is made. These machines are designed for packing rolls whose axes are vertical or horizontal, as required. The invention proposes a combined machine which, by means of small and rapid setting operations, is capable of packing either horizontal or vertical rolls, with the possibility in either case of forming sets of any number of rolls.

The features of the combined machine according to the invention, and the advantages procured thereby, will become clear in the following description of a preferred embodiment, which is illustrated purely by way of a non-restricting example in the figures shown on the single accompanying sheet of drawings, in which:
- Fig. 1 schematically shows the machine as configured for packing rolls of paper with their axes horizontal;
- Fig. 2 shows the machine as configured for packing rolls of paper with their axes vertical;
- Figs. 3 and 4 show rolls of paper, the first with a horizontal axis and the second with a vertical axis.

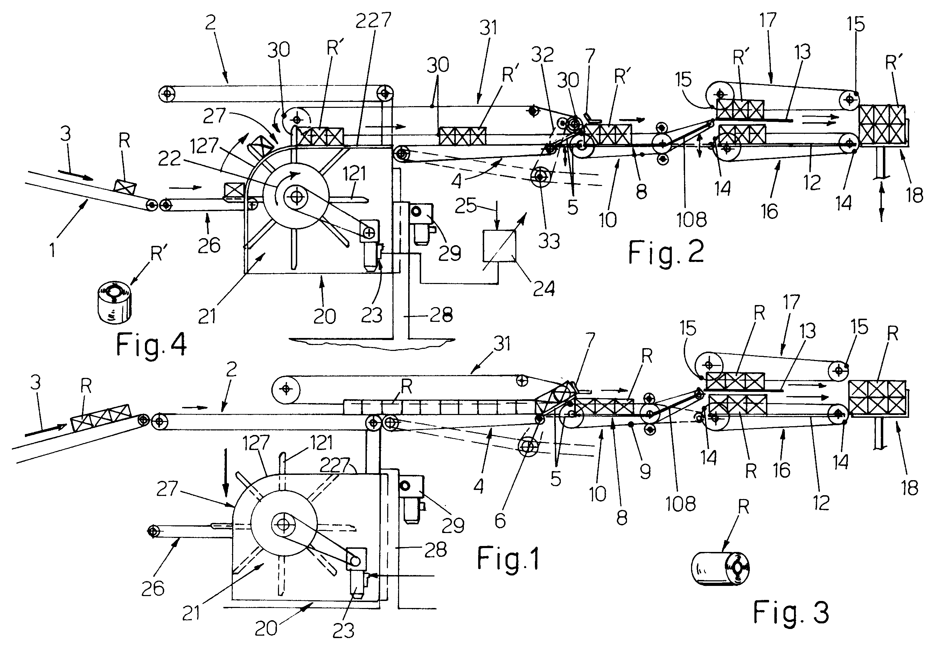

Referring initially to Figure 1, it will be seen that the machine for packing one or more superimposed layers of rolls R of toilet paper comprises conveyors 1 and 2, one following the other, on which these rolls travel, being guided in single file and in a plurality of parallel lines, in the direction indicated by the arrow 3. The axes of the rolls are horizontal, as shown in Figure 3. From the conveyor 2 the rolls are fed to a conveyor 4 equipped at the end part with a surface 5 which cyclically oscillates about a transverse spindle 6 and which, when raised, stops the lines of rolls against a retainer 7, whereas when lowered it permits these rolls to pass through in guide channels 8 in which said oscillating surface forms sets made up of a predetermined number of rolls. When the oscillating surface 5 rises, the set of rolls that has been fed into the channels 8 is pushed forward by one of the cross pieces 9 of a parallel-chain conveyor 10, driven in phase with the oscillating movement of the surface 5. The guide channels 8 have an end part 108 which, in response to a command, oscillates about a transverse spindle 11 so that the sets of rolls 1 are fed alternately to two superimposed preparation surfaces 12, 13 separated from each other by a distance slightly greater than the height of the rolls. When corresponding sets of rolls have been fed onto the surfaces 12, 13, these rolls are pushed simultaneously by the cross pieces 14 and 15 of synchronized parallel-chain conveyors 16 and 17, which introduce the superimposed sets of rolls onto a lift 18 which transfers them all together to a packing station (not shown).

In order to make it possible for such a machine to also pack sets of rolls of paper R' with their axes vertical as in Figure 4, as an alternative to the above, the following arrangements have been devised. Figures 1 and 2 show that the frame of the conveyor 2 is mounted by connections 19 or the like on the frame of a lower, known unit 20, equipped with a wheel 21 with identical spokes 121 set out at equal angular intervals, which, if necessary, can be turned in the direction indicated by the arrow F2, by the use of any suitable means enabling it to operate at variable speeds and in phase with the machine cycle, for example by a connection to an electronically-controlled geared-down motor 23 (e.g. a brushless motor) connected to a microprocessor 24, which can be programmed through the machine's control panel and has an input 25 connected to a transducer which indicates the speed and phase of the machine. This embodiment enables the operating parameters of the machine, as regards the number of rolls being cyclically gathered and transferred to the packing means, to be modified quickly and easily, as described in greater detail below. It will be understood that other suitable means can be used for this purpose, such as variable-speed drive units, gearboxes and the like, whether automatic, semi-automatic or manual.

As they rotate in the direction indicated by the arrow 22, the spokes 121 come up under a set of conveyors 26, which meet the unit 20, and they project through and travel along guide channels 27, only the base of which is shown. These guide channels 27 comprise a first portion 127 that curves through 90° and a subsequent straight-horizontal section 227. The mounting of the unit 20 allows it to move vertically on a guiding and supporting complex 28, and actuators 29 are provided so that this unit can be moved on command. In order to enable vertical rolls to be packed, the unit 20 is raised from the position shown in Figure 1 to that shown in Figure 2 so that the straight end part 227 of the guide channels 27 is aligned with and meets the conveyor 4. The conveyor 1 is so designed that it can now be moved down to the conveyors 26. The rolls R with their axes horizontal are fed from the conveyor 1 to the conveyors 26 which introduces them into the bottom part of the guide channels 27, where the rolls are raised by the spokes 121 and accumulated in a vertical position one behind the other in the straight upper part 227 of these guide channels. Here the sets of rolls, consisting of the desired number of vertical rolls R', on the basis of the speed of rotation of the wheel 21, are taken in phase by the pushing cross pieces 30 of a parallel-chain conveyor 31 - similar to conveyors 16 and 17 - which feeds the sets of rolls R' in phase into the guide channels 8, with the oscillating surface 5 which is initially in the low position and then rises to allow through a cross piece 9 of the conveyor 10 which takes over the set of rolls and conveys it towards the preparation surfaces 12, 13, as already stated in relation to the machine of Figure 1.

The conveyor 2 is positioned above the conveyor 31 and does not interfere with it.

The chains of the conveyor 31 are each provided at one end with a respective sprocket-and-chain drive 32, or some other positive drive, which is linked to a synchronizing shaft 33 located out of the way of the rolls and rotates in phase with the other components of the machine. The pushing cross pieces 30 of the conveyor 31 are designed for easy removal if necessary, for example having telescopic spring-loaded couplings at their ends, so that when the unit 20 is lowered and the machine is being used in the setup shown in Figure 1, the same conveyor 31 creates no obstructions and its chains can if necessary be left running, or else can be stopped provided they can then be reactivated in phase with the machine when it is desired to run the machine in the setup shown in Figure 2.

It will be understood that the description has referred to a preferred embodiment of the invention, many variants and modifications of which are possible, especially from the point of view of construction, without however departing from the underlying principle of the invention as set forth above, as illustrated and as claimed below. In the following claims, references given in brackets are intended purely as indications and do not restrict the scope of protection of said claims.

## Claims

1. A machine for packing articles such as rolls of paper (R, R') comprising a feeding line (1), a first feeding conveyor (2), a second gathering conveyor (4), a third conveyor (8, 10) with pushing cross pieces (9), said third conveyor being provided with at least one pivoting end portion (108) which positions itself alternately against superimposed lower and upper stacking surfaces (12, 13), synchronized conveyors (16, 17) with pushing cross pieces (14, 15) being provided at the stacking surfaces for delivering the rolls onto a wrapping machine lifting platform (18)
characterized by the fact that
underneath the first feeding conveyor (2) and integral with the supporting frame of the said first conveyor there is provided a carousel unit (20) which can be raised from a lower rest position to an upper operative position and aligned with the second gathering conveyor (4) and which can be connected with the feeding line (1) through an auxiliary conveyor (26) leading to the bottom part of guide channels (27) having an initial ascending part (127) curving though 90° and a subsequent horizontal straight part (227) along which the spokes (121) of a rotating wheel (21) transfer the rolls from the auxiliary conveyor (26), whereby the rolls are turned with their axes through 90°, a pushing conveyor (31) being provided for transferring the rolls from the said horizontal straight part (227) along said second conveyor (4) to the said third conveyor (10).

2. A machine according to claim 1, in which the rotating wheel (21) is driven by means of an electronically-controlled motor connected to a processor unit (24).

3. A machine according to claim 1, in which the pushing conveyor (31) comprises, as pushing elements, removable cross pieces (30) which can be easily and quickly removed when said carousel unit (20) is lowered to its rest position.
